# EUROPÄISCHE PATENTSCHRIFT

(11) **EP 1 236 610 B1**
(45) Veröffentlichungstag und Bekanntmachung des Hinweises auf die Patenterteilung: **30.04.2008**
(21) Anmeldenummer: 02004411.1
(22) Anmeldetag: 26.02.2002
(51) Int. Cl.: B60N 2/66

(54) **Verfahren zur Herstellung einer Lordosenstütze**
Method for making a lumbar support
Procédé de fabrication d'un appui lombaire

(30) Priorität: 02.03.2001 DE 10110138
(43) Veröffentlichungstag der Anmeldung: 04.09.2002
(73) Patentinhaber: Schwarzbich, Jörg, 33615 Bielefeld (DE)
(72) Erfinder: Rutsch, Hermann W., 33129 Delbrück (DE)
(74) Vertreter: TER MEER - STEINMEISTER & PARTNER GbR

(56) Entgegenhaltungen:
- EP-A- 0 780 262
- WO-A-01/10670
- FR-A- 2 532 883
- FR-A- 2 534 792
- FR-A- 2 726 334
- FR-A- 2 759 649
- US-A- 3 264 034
- US-A- 3 860 287
- US-A- 5 165 754
- US-A- 5 700 057
- US-A- 5 769 491

## Beschreibung

Die Erfindung betrifft ein Verfahren zur Herstellung einer Lordosenstütze mit einem in seiner Wölbung verstellbaren Stützelement aus Kunststoff an Stäben einer durch Längs- und Querstäbe gebildeten Gittermatte.

In der Rückenlehne von Sitzen, insbesondere von Kraftfahrzeugsitzen, ist häufig eine Lordosenstütze eingebaut, die es durch Wölbungsverstellung ermöglicht, die Kontur der Rückenlehne an die Anatomie des Benutzers anzupassen und der Wirbelsäule des Benutzers besseren Halt zu geben. Das Stützelement einer solchen Lordosenstütze wird durch eine mehr oder minder stark durchbrochene Platte aus Kunststoff gebildet, deren obere und untere Ränder mit Hilfe eines Bowdenzuges zusammengezogen werden können, so daß die Platte sich durchbiegt und dadurch ihre Wölbung verändert. Das Stützelement ist im Bereich seiner oberen und unteren Ränder an Querstäben einer Gittermatte befestigt, die dazu dient, die Rückenlehne in der Fläche zu versteifen. Diese Gittermatte wird üblicherweise durch ein Drahtgitter gebildet, das mit Druck- oder Zugfedern so im Rahmen der Rückenlehne aufgehängt ist, daß die Längsstäbe im wesentlichen vertikal in der Ebene der Rückenlehne verlaufen. Die aus dünneren Drähten bestehenden Querstäbe sind an den Enden zu Ösen gebogen, die die Längsstäbe eng umschlingen und so zur Befestigung der Querstäbe an den Längsstäben dienen.

Ein Beispiel für eine Einheit aus Gittermatte und Lordosenstütze dieser Art wird in EP-A-0 780 262 die ein Verfahren zur Herstellung einer Lordosenstütze entsprechend dem Oberbegriff des Anspruchs 1 zeigt beschrieben. Bei der Herstellung werden die Gittermatte und das Stützelement zunächst als getrennte Bauteile hergestellt. Das durch ein KunststoffSpritzgußteil gebildete Stützelement wird dann in einem besonderen Arbeitsschritt durch Verrastung an den Querstäben der Gittermatte befestigt. Dazu müssen die Rastorgane an dem Stützelement so ausgebildet werden, daß einerseits eine ausreichend stabile Befestigung gewährleistet wird, andererseits jedoch die Querstäbe so leichtgängig eingerastet werden können, daß die Verrastung bei der industriellen Fertigung in kurzer Zeit und mit hoher Funktionssicherheit hergestellt werden kann.

Für Kraftfahrzeugsitze sind aktive Kopfstützen entwickelt worden, die bei einem Aufprall des Fahrzeugs selbsttätig nach vorn schwenken, um den infolge des Aufpralls nach hinten geschleuderten Kopf des Benutzers früher aufzufangen und so ein Schleudertrauma zu verhindern. Die Schwenkbewegung der akiven Kopfstützen wird durch ein Auslöseelement ausgelöst, das in die Rückenlehne des Sitzes eingebaut ist und auf den vom Oberkörper des Benutzers erzeugten Druck anspricht, wenn dieser bei dem Aufprall in die Rückenlehne gepreßt wird. Das Auslöseelement weist ein Gehäuse oder sonstige Funktionsteile aus Kunststoff auf, die die entsprechenden Sensoren aufnehmen und die ähnlich wie das Stützelement der Lordosenstütze an der Gittermatte zu befestigen sind. Aus der DE 198 50 758 ist ein Verfahren zur Herstellung eines Auslöseelements einer aktiven Kopfstütze gemäß dem Oberbegriff des Anspruchs 14 bekannt.

Aus FR-A-2 531 883 ist ein Verfahren zur Herstellung eines Elements eines Sitzes bekannt, bei dem ein durch ein Netz von Schraubenfedern verstärkter Bezug mit einem Rahmen aus Kunststoff versehen wird. Dazu läßt man den Rand des Bezuges sowie ein längs dieses Randes verlaufendes Dichtband in einen Formhohlraum eines Spritzgießwerkzeugs hinein ragen und umspritzt den Bezug mit dem Rahmen aus Kunststoff.

Aufgabe der Erfindung ist es, die Herstellung und Befestigung der Lordosenstütze oder des Auslöseelements für aktive Kopfstützen an der Gittermatte zu vereinfachen.

Diese Aufgabe wird erfindungsgemäß dadurch gelöst, daß die Stäbe in ein Spritzgießwerkzeug für das Stützelement eingebracht werden, daß dabei die Querstäbe in Quernuten des Spritzgießwerkzeugs eingeführt werden, die beiderseits eines Formhohlraumes für das Stützelement in einem Unterwerkzeug und einem Oberwerkzeug ausgebildet sind, und daß die Querstäbe beim Schließen des Formwerkzeugs zwischen den Unter- und Oberwerkzeugen gehalten und beim Spritzen des Stützelements in dieses eingebettet werden

Erfindungsgemäß werden somit die Herstellung des Stützelements und dessen Befestigung an der Gittermatte in einen einzigen Arbeitsschritt integriert, so daß die Anzahl der Arbeits- und Handhabungsvorgänge reduziert wird. Durch die Einbettung der Stäbe der Gittermatte in den Kunststoff des Stützelements wird dabei eine äußerst stabile Befestigung erreicht.

Vorteilhafte Ausgestaltungen der Erfindung ergeben sich aus den Unteransprüchen.

Bevorzugt werden die Querstäbe und/oder die Längsstäbe der Gittermatte mit dem Kunststoff umspritzt, so daß eine starre Verbindung entsteht. Wahlweise können beim Spritzen des Stützelements jedoch auch Ösen angeformt oder Gleithülsen aus Metall eingespritzt werden, in die dann die Längsstäbe der Gittermatte eingeschoben werden. Auf diese Weise läßt sich auch eine sogenannte Vierwege-Lordosenstütze herstellen, bei der das Stützelement nicht nur in der Wölbung, sondern auch in der Höhe relativ zur Gittermatte verstellbar ist. Dabei können auch Komponenten des Verstellmechanismus in das Spritzgießwerkzeug eingelegt und umspritzt werden.

In einer besonders bevorzugten Ausführungsform werden die Querstäbe der Gittermatte, bevor sie mit den Längsstäben verbunden werden, als Endlosmaterial in das Spritzgießwerkzeug zugeführt. Dabei können die Querstäbe mit einem Ende gegen einen im Werkzeug ausgebildeten Anschlag vorgeschoben und dann am anderen Ende abgeschnitten werden. Dabei läßt sich das Schneidwerkzeug so mit dem Spritzgießwerkzeug kombinieren, daß die Einrichtungen zur Erzeugung der zum Zuhalten des Spritzgießwerkzeugs benötigten Schließkräfte auch für die Betätigung des Schneidwerkzeugs genutzt werden können.

Da bei dem erfIndungsgemäßen Verfahren die Querstäbe der Gittermatte durch das Spritzgießwerkzeug oder durch das fertige Kunststoffteil in Position gehalten werden, läßt sich auch die Herstellung der Gittermatte dadurch vereinfachen, daß die Querstäbe erst während oder nach dem Spritzgießen mit den Längsstäben verbunden werden. Dabei kann das Spritzgießwerkzeug auch dazu benutzt werden, diejenigen Querstäbe in Position zu halten, die nicht in das Stützelement eingebettet werden.

Die Längsstäbe der Gittermatte können dadurch provisorisch in ihrer Position fixiert werden, daß sie in entsprechende Nuten in einer Werkzeughälfte des Spritzgießwerkzeugs eingeführt werden. Die Befestigung der Querstäbe an den Längsstäben kann dann wie bisher durch Ösenbildung erfolgen, wobei die Biegewerkzeuge für die Herstellung der Drahtösen in das Spritzgießwerkzeug integriert sein können. Alternativ ist es auch möglich, die Querstäbe an die Längsstäbe anzuschweißen. In diesem Fall können auch die Schweißelektroden in das Spritzgießwerkzeug integriert sein. Beide Verfahrensvarianten haben den Vorteil, daß die Abkühlzeit zwischen dem Einspritzen des Kunststoffs und dem Entformen des Stützelements für andere Arbeitsschritte, insbesondere für die Befestigung der Querstäbe an den Längsstäben genutzt werden kann.

Da die scharfkantigen Drahtenden an den Befestigungspunkten der Querstäbe bei der späteren Handhabung der Gittermatte leicht zu Verletzungen oder zu Kratzern an anderen Bauteilen führen können, ist es zweckmäßig, auch diese Befestigungspunkte mit Kunststoff zu umspritzen. Dieses Umspritzen kann mit demselben Werkzeug geschehen, mit dem auch das Stützelement hergestellt wird, und bietet den zusätzlichen Vorteil, daß die Befestigung der Querstäbe an den Längsstäben zusätzlich stabilisiert wird. Wahlweise kann die Verbindung zwischen Längs- und Querstäben auch allein durch das Umspritzen bewirkt werden.

Da die Gittermatte mit Druck- oder Zugfedern in die Rückenlehne eingehängt wird, sollten an der Gittermatte, insbesondere an deren Längsstäben, geeignete Verankerungsstellen für die Federn ausgebildet werden. Dies geschieht bisher dadurch, daß die Längsstäbe im Bereich der Verankerungsstellen etwas ausgebogen werden. Bei dem erfindungsgemäßen Verfahren lassen auch diese Ausbiegungen der Längsstäbe mit geeigneten Biegeeinrichtungen im Spritzgießwerkzeug herstellen. Andererseits bietet das erfindungsgemäße Verfahren auch die Möglichkeit, diese Verankerungsstellen durch an die Längsstäbe angespritzte Kunststoffteile zu bilden, in welche die Federn ggf. unverlierbar eingeclipst werden können.

Das erfindungsgemäße Verfahren läßt sich analog auch für die Befestigung der erwähnten Funktionsteile der Auslöseelemente an der Gittermatte einsetzen.

Im folgenden werden Ausführungsbeispiele der Erfindung anhand der Zeichnung näher erläutert.

Es zeigen:
- Fig. 1: eine Rückansicht einer Gittermatte mit einer Lordosenstütze gemäß der Erfindung;
- Fig. 2: ein Unterwerkzeug einer Vorrichtung, die zum Spritzgießen der Lordosenstütze und zugleich zur Herstellung der Gittermatte dient, in der Draufsicht;
- Fig. 3: einen Schnitt durch das Unterwerkzeug und ein zugehöriges Oberwerkzeug längs der Linie III-III in Figur 2;
- Fig. 4: einen Schnitt durch das Unterwerkzeug und das Oberwerkzeug längs der Linie IV-IV in Figur 2;
- Fig. 5 - 8: Schnitte entsprechend Figur 4 zur Illustration des Herstellungsverfahrens;
- Fig. 9 + 10: Teilschnitte durch eine Vorrichtung zur Herstellung der Lordosenstütze und der Gittermatte gemäß einer anderen Ausführungsform des erfindungsgemäßen Verfahrens;
- Fig. 11: einen Teil des Unterwerkzeugs der Vorrichtung nach Figuren 9 und 10 in der Draufsicht;
- Fig. 12: einen Schnitt durch einen Verbindungsbereich zwischen einem Längsstab und einem Querstab der Gittermatte;
- Fig. 13: Teile des Längsstabes und des Querstabes in der Draufsicht; und
- Fig. 14 - 16: Teilschnitte durch eine Vorrichtung zur Herstellung der Lordosenstütze und der Gittermatte gemäß einer weiteren Ausführungsform des Verfahrens.

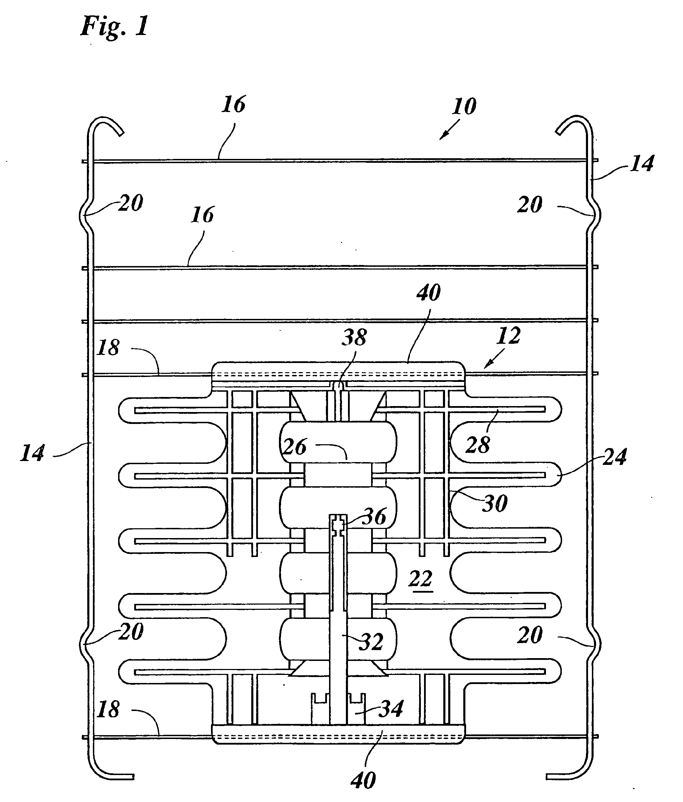

In Figur 1 ist eine Gittermatte 10 mit einer daran befestigten Lordosenstütze 12 gezeigt. Die Gittermatte 10 wird durch zwei an den Enden umgebogene Längsstäbe 14 gebildet, die durch mehrere sprossenartig angeordnete Querstäbe 16, 18 miteinander verbunden sind. Bei den Längsstäben 14 handelt es sich im gezeigten Beispiel um Metalldrähte mit einem verhältnismäßig großen Querschnitt und einer entsprechend hohen Biegesteifheit, während die Querstäbe 16, 18 durch dünnere Metalldrähte oder Stäbe aus Flachstahl gebildet werden. Jeder der Längsstäbe 14 weist zwei Ausbiegungen 20 auf, die als Verankerungsstellen für nicht gezeigte Zugfedern dienen, mit denen die Gittermatte 10 so im Rahmen einer Rückenlehne eines Sitzes aufgehängt wird, daß sie im wesentlichen in der Ebene der Rückenlehne in der Polsterung liegt und der Rückenlehne das geforderte Maß an Steifheit und Nachgiebigkeit verleiht. Wahlweise können die Längsstäbe auch als gelochte Flachbänder ausgebildet sein, deren Löcher zum Einhängen der Zugfedern dienen.

Die Lordosenstütze 12 weist ein im wesentlichen plattenförmiges Stützelement 22 aus Kunststoff auf, das auf beiden Seiten mehrere seitlich abstehende Finger 24 bildet und in der Mitte mit Durchbrüchen 26 versehen ist. Die Finger 24 sind an der Rückseite durch angeformte Rippen 28 versteift. Durch rechtwinklig zu den Rippen 28 verlaufende, jedoch unterbrochene Rippen 30 wird die Steifheit des Stützelements 22 so eingestellt, daß es sich um eine Querachse elastisch durchbiegen läßt und sich dabei in der Richtung senkrecht zur Zeichenebene in Figur 1 mehr oder minder stark auswölbt. Ein im wesentlichen vertikal verlaufender Hebel 32 ist mittig auf der Rückseite des Stützelements 22 angeordnet und an seinem unteren Ende in einem Lager 34 schwenkbar an dem Stützelement gelagert. Das obere Ende des Hebels 32 bildet eine Verankerungsstelle 36 für das Außenkabel eines nicht gezeigten Bowdenzuges. Eine Verankerungsstelle 38 für das zugehörige Innenkabel ist in der Nähe des oberen Randes des Stützelements 22 angeordnet. Mit Hilfe des Bowdenzuges kann folglich das Stützelement 22 in vertikaler Richtung auf Kompression beansprucht werden, so daß es sich in Richtung auf den Rücken des Benutzers durchwölbt.

Zur Befestigung am Drahtgitter 10 weist das Stützelement an seinen oberen und unteren Rändern je eine Verdickung 40 auf, in die jeweils einer der Querstäbe 18 eingebettet ist. Auf diese Weise ist das Stützelement 22 stabil und ausreißsicher an der Gittermatte 10 gehalten. Wenn das Stützelement 22 durchgewölbt wird und sich dabei in vertikaler Richtung verkürzt, werden die Querstäbe 18 elastisch durchgebogen. Da die Querstäbe in die Verdickungen 40 eingebettet sind, können sie jedoch auch unter dieser Beanspruchung nicht von dem Stützelement abgerissen werden.

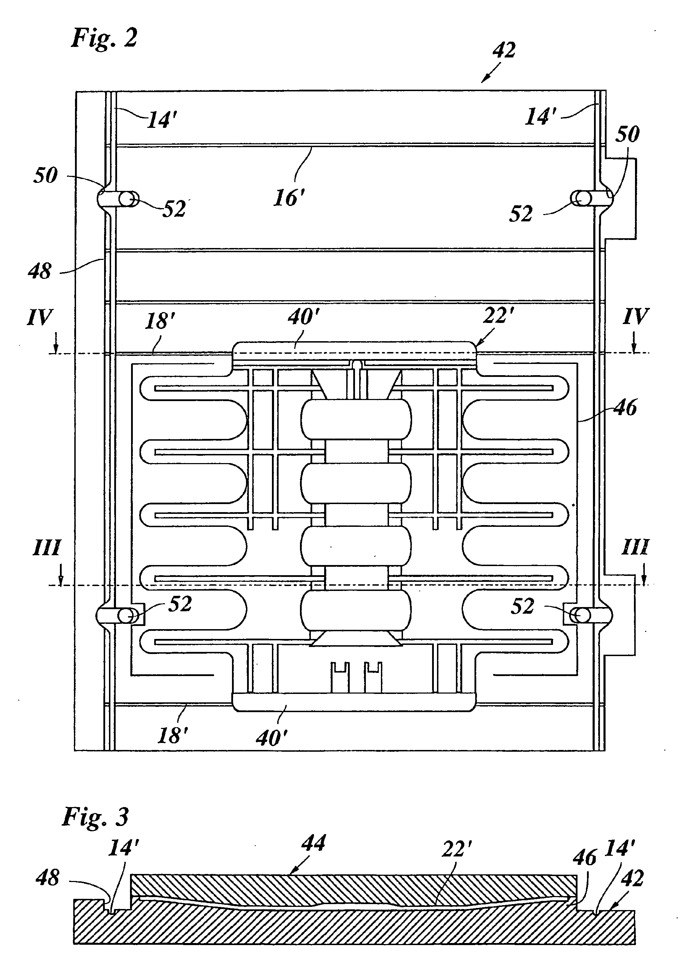

Zur Herstellung des Stützelements 22 dient ein Spritzgießwerkzeug, dessen Untewerkzeug 42 in Figur 2 gezeigt ist. Figur 3 zeigt einen Schnitt durch das Unterwerkzeug 42 und das zugehörige Oberwerkzeug 44.

Das Unterwerkzeug 42 bildet einen Formhohlraum 22', mit dem die in Figur 1 sichtbare Rückseite des Stützelements 22 geformt wird. Wie Figur 3 zeigt, sind die Bereiche des Formhohlraums 22', die die Finger 24 bilden, leicht nach oben angewinkelt. Zu diesem Zweck bildet das Unterwerkzeug 42 schräg nach außen ansteigende Plateaus 46. Außerhalb des Formhohlraums 22' und der Plateaus 46 weist das Unterwerkzeug 42 eine flache Oberfläche auf, die von Längsnuten 14' und Quernuten 16', 18' durchzogen ist. Die Längsnuten 14' sind so tief, daß sie den gesamten Querschnitt der Längsstäbe 14 aufnehmen können. Die Quernuten 16', 18' sind dagegen flacher gehalten, so daß sie jeweils nur die untere Hälfte des Querschnitts der Querstäbe 16, 18 aufnehmen, während die obere Hälfte des Querschnitts durch entsprechende Nuten des Oberwerkzeugs 44 aufgenommen wird. Die Quernuten 16', 18' werden auf der linken Seite in Figuren 2 und 3 durch einen Anschlag 48 begrenzt, während sie auf der rechten Seite zum Rand des Unterwerkzeugs offen sind. Der Rand des Unterwerkzeugs bildet hier eine Scherkante, an der die Querstäbe 16, 18 abgeschert werden können. Die Quernuten 18' münden in Vertiefungen 40' des Formhohlraums 22', die den Verdickungen 40 des Stützelements 22 entsprechen.

Die Längsnuten 14' sind stellenweise zu Schablonen 50 erweitert, denen jeweils ein Biegewerkzeug 52 zugeordnet ist. Die Längsstäbe 14 werden zunächst im nicht gebogenen Zustand axial in die Längsnuten 14' eingeführt. Wahlweise können die Längsstäbe dabei ähnlich wie die Querstäbe 16, 18 als Endlosmaterial gegen einen Anschlag zugeführt und dann im Werkzeug abgelängt werden. Anschließend werden die Biegewerkzeuge 52 nach außen gezogen, so daß die Ausbiegungen 20 in den Längsstäben 14 gebildet werden. Die Biegewerkzeuge 52, die derselben Längsnut 14' zugeordnet sind, werden vorzugsweise zeitlich nacheinander betätigt, damit die Längsstäbe 14 sich während des Biegevorgangs axial in den Längsnuten 14 verschieben können, um den durch die Ausbiegungen 20 bedingten Mehrbedarf an Material auszugleichen. Anschließend werden die Enden der Längsstäbe 14 in der in Figur 1 gezeigten Weise umgebogen. Wahlweise kann auch dies mit Hilfe von Biegewerkzeugen geschehen, die in das Unterwerkzeug 42 integriert sind.

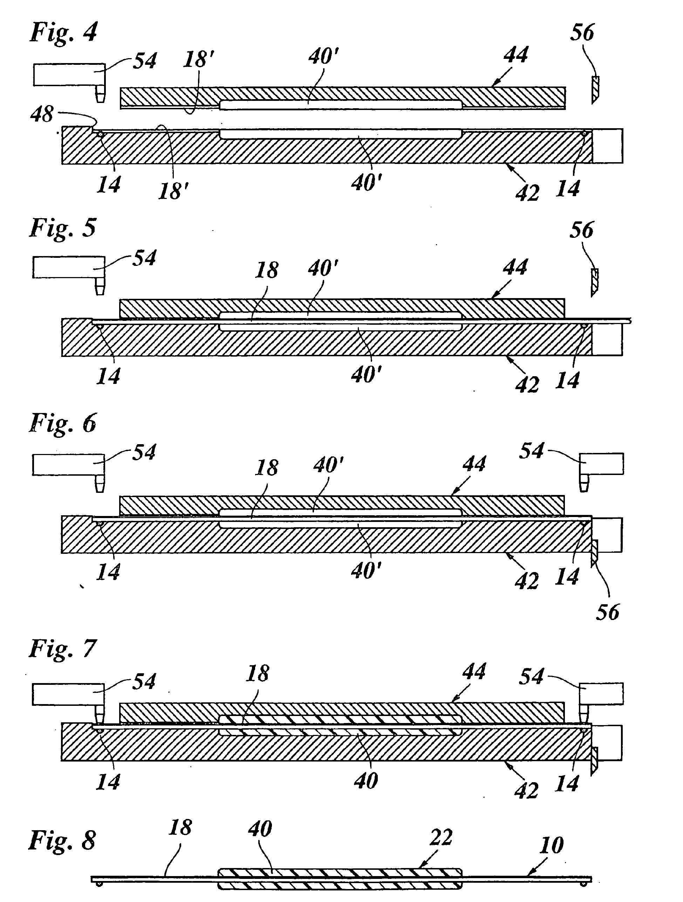

Figur 4 zeigt einen Schnitt durch das geöffnete Spritzgießwerkzeug in Höhe einer der Quernuten 18'. Die Längsstäbe 14 sind hier bereits in die Längsnuten eingeführt und in der oben beschriebenen Weise gebogen werden. Am linken Rand des Spritzgießwerkzeugs ist eine Schweißelektrode 54 gezeigt, die vertikalbeweglich am Oberwerkzeug 44 gehalten ist und dazu dient, einen der Querstäbe 18 mit dem Längsstab 14 zu verschweißen. Entsprechende Schweißwerkzeuge sind auch für die übrigen Querstäbe 16, 18 vorgesehen.

Am rechten Rand des Spritzgießwerkzeugs ist in Figur 4 ein Schneidmesser 56 gezeigt, das ebenfalls vertikalbeweglich am Oberwerkzeug 44 gehalten ist und zusammen mit der Schneidkante des Unterwerkzeugs 42 dazu dient, die Querstäbe 16, 18 abzulängen.

Die Querstäbe 16, 18 werden als endlose Drähte von der rechten Seite des Spritzgießwerkzeugs her zugeführt und jeweils bis zum Anschlag 48 in die Quernuten 16', 18' des Unterwerkzeugs eingeschoben.

Wie Figur 5 zeigt, wird anschließend das Spritzgießwerkzeug geschlossen, so daß der Querstab 18 zwischen dem Unterwerkzeug 42 und dem Oberwerkzeug 44 in Position gehalten wird. Entsprechendes gilt auch für die in Figur 5 nicht erkennbaren Querstäbe 16. Für die Querstäbe 18 gilt allerdings die Besonderheit, daß sie sich frei durch das Innere der Vertiefungen 40' des Formhohlraums erstrecken.

Anschließend wird das Schneidmesser 56 abgesenkt, um den Querstab 18 an der Schneidkante des Unterwerkzeugs 42 abzuschneiden, wie in Figur 6 gezeigt ist. Auf dieselbe Weise werden auch die übrigen Querstäbe 16, 18 abgelängt. Oberhalb des Schneidmessers 56 wird dann eine weitere Schweißelektrode 54 in Position gebracht. Wie Figur 7 zeigt, werden dann die Schweißelektroden 54 abgesenkt, um den Querstab 18 und entsprechend auch die Querstäbe 16 an beiden Enden mit den Längsstäben 14 zu verschweißen. Etwa gleichzeitig wird Kunststoffschmelze in den Formhohlraum 22' eingespritzt, um das Stützelement 22 zu bilden. Dabei werden die Querstäbe 18 mit Kunststoffschmelze umspritzt und in die Verdickungen 40 des Stützelements eingebettet. Nach dem Entformen erhält man schließlich die in Figur 8 gezeigte Einheit aus Gittermatte 10 und Stützelement 22.

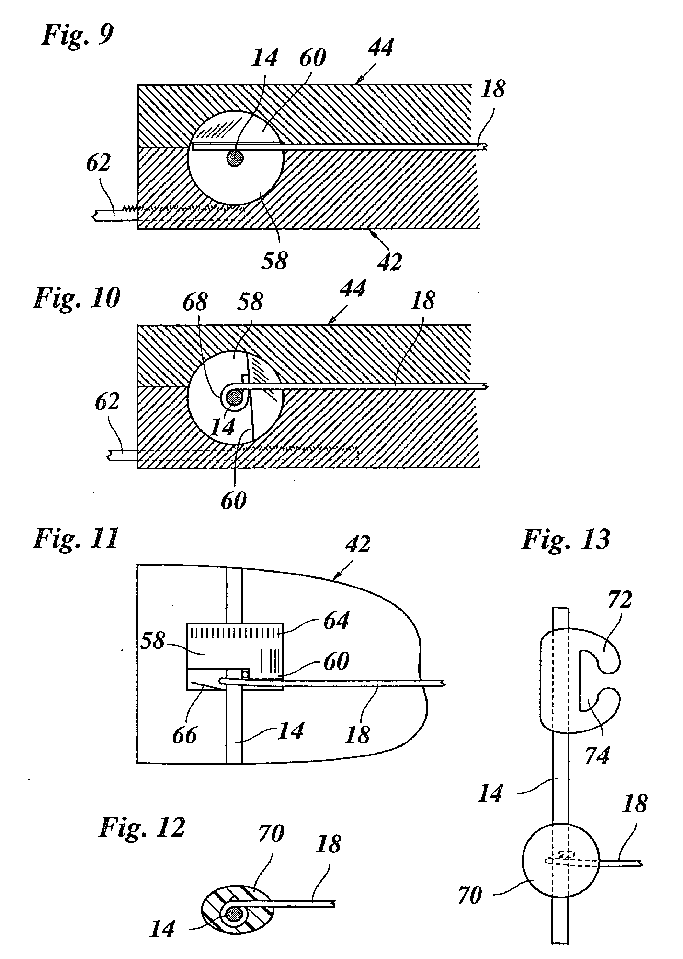

Eine abgewandelte Ausführungsform der Erfindung wird nachstehend anhand der Figuren 9 bis 11 erläutert. Diese Ausführungsform unterscheidet sich von dem zuvor beschriebenen Verfahren dadurch, daß die Querstäbe 16, 18 nicht an die Längsstäbe angeschweißt werden, sondern an den Enden zu Ösen gebogen werden, die die Längsstäbe fest umschlingen. Auch das Biegen der Ösen erfolgt jedoch etwa zeitgleich mit dem Spritzgießvorgang. Zu diesem Zweck weisen das Oberwerkzeug 44 und das Unterwerkzeug 42 jeweils an der Verbindungsstelle zwischen dem Querstab 18 und dem Längsstab 14 Aussparungen in der Form von Zylindersegmenten auf, die sich bei geschlossenem Werkzeug zu einem kreiszylindrischen Hohlraum ergänzen, der auf den Längsstab 14 bzw. die zugehörige Längsnut 14' des Unterwerkzeugs zentriert ist. Eine zylindrische Biegescheibe 58 ist drehbar in diesem Hohlraum gelagert und weist an ihrer dem Querstab 18 zugewandten Stirnfläche einen kreissegmentförmigen Vorsprung 60 auf. In dem in Figur 9 gezeigten Zustand liegt dieser Vorsprung 60 ganz innerhalb des Oberwerkzeugs 44. Der Querstab 18 wird in die zugehörige Quernut 18' eingeschoben, bis er mit seinem Ende an der Umfangsfläche des zylindrischen Hohlraums anstößt.

Die Biegescheibe 58 ist drehantreibbar. Zum Drehantrieb dient eine Zahnstange 62, die von der Seite her in einen nicht gezeigten Kanal des Unterwerkzeugs 42 eintaucht und mit einer auf der Umfangsfläche der Biegescheibe 58 ausgebildeten Zahnung 64 kämmt. Diese Zahnung 64 ist in Figur 11 zu erkennen. Weiterhin zeigt Figur 11, daß der Vorsprung 60 gegenüber dem Querstab 18 versetzt ist, so daß er sich an dem Querstab vorbeidrehen kann. Eine Blattfeder 66, die an der Stirnfläche des zylindrischen Hohlraums im Unterwerkzeug 42 angeordnet ist, sorgt jedoch dafür, daß das Ende des Querstabes 18 etwas in Richtung auf die Biegescheibe 58 abgelenkt wird, wenn der Querstab 18 in der in Figur 9 gezeigten Weise eingeführt wird. Wenn nun die Zahnstange 62 verschoben wird, um die Biegescheibe 58 im Gegenuhrzeigersinn zu drehen, so wird das Ende des Querstabes 18 von dem Vorsprung 60 erfaßt und zu einer den Längsstab 14 eng umschließenden Öse 68 gebogen, wie in Figur 10 zu erkennen ist. Auf diese Weise lassen sich die Querstäbe 18 und entsprechend auch die Querstäbe 16 während des Spritzgießvorgangs oder unmittelbar davor oder danach stabil an den zugehörigen Längsstäben 14 befestigen.

Wahlweise können die Verbindungsstellen zwischen den Querstäben 16, 18 und den Längsstäben 14 jeweils mit einer Umhüllung 70 aus Kunststoff umspritzt werden, wie in Figuren 12 und 13 gezeigt ist. Dies gilt entsprechend auch für die durch Schweißen hergestellten Verbindungsstellen gemäß Figur 8. In demselben Arbeitsgang können an die Längsstäbe 14 auch Verankerungsstellen 72 aus Kunststoff angespritzt werden, die das Einhaken der erwähnten Zugfedern ermöglichen und somit die in Figur 1 gezeigten Ausbiegungen 20 ersetzen. In Figur 13 bildet die Verankerungsstelle 72 eine Öse 74 auf der Innenseite des Längsstabes 14, also auf der Seite, die zur Mitte der Gittermatte weist. Durch diese Anordnung wird eine stabile Verankerung der Zugfeder ermöglicht, da das hakenförmig gebogene Ende der Zugfeder, das in die Öse 74 eingreift, auch den durch den Längsstab 14 verstärkten Teil der Verankerungsstelle umgreift.

In entsprechender Weise können je nach Bedarf auch andere Teile der Längs- und Querstäbe mit Kunststoff umspritzt werden um zusätzliche Funktionsteile an der Gittermatte zu befestigen. Insbesondere ist es möglich, das Biegeverhalten der Gittermatte gezielt zu beeinflussen, indem die Drähte stellenweise mit mehr oder minder dicken Umhüllungen aus Kunststoff umspritzt werden und/oder die Querstäbe 16, 18 an geeigneten Stellen durch Abastandshalter aus Kunststoff verbunden werden.

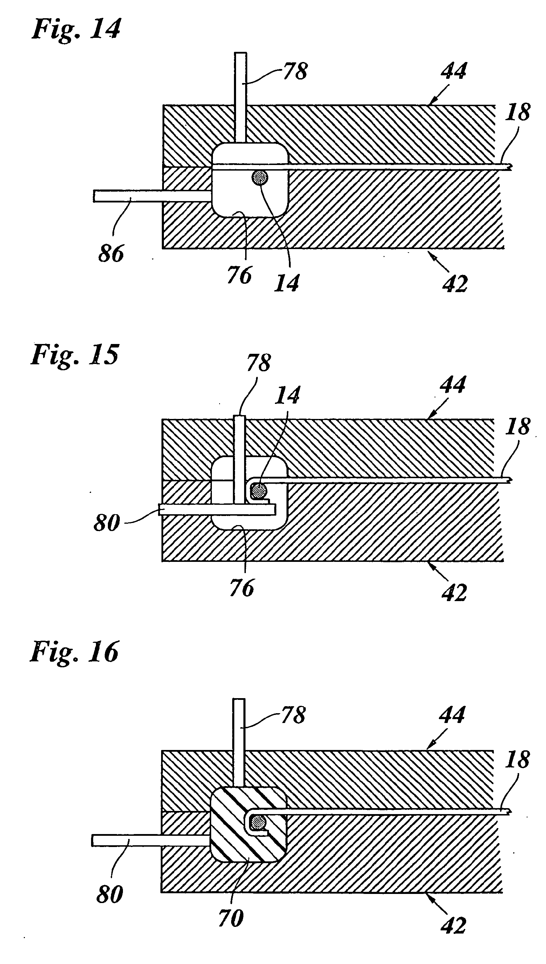

Figuren 14 bis 16 illustrieren eine Möglichkeit, das Spritzgießen des Stützelements 22, das Biegen der Querstäbe 16, 18 und das Umspritzen der Verbindungsstellen zwischen den Querstäben und den Längsstäben zu einem einzigen Arbeitsgang zusammenzufassen. Zu diesem Zweck bilden das Oberwerkzeug 44 und das Unterwerkzeug 42 an jeder Verbindungsstelle zwischen den Längsstäben 14 und den Querstäben 18 (oder 16) einen Formhohlraum 76 für die Umhüllung 70. Gemäß Figur 14 wird der Querstab 18 bis zur Innenwand des Formhohlraums 76 durchgeschoben. Während der Längsstab 14 durch das Unterwerkzeug 42 in Position gehalten wird, wird im Oberwerkzeug 44 ein Schieber 78 abgesenkt, so daß das Ende des Querstabes 18 innerhalb des Formhohlraums 76 um den Längsstab 14 herum nach unten gebogen wird. Anschließend wird, wie in Figur 15 gezeigt ist, ein Schieber 80 des Unterwerkzeugs waagerecht nach innen gefahren, um das Ende des Querstabes 18 erneut abzuwinkeln, so daß es zu einem den Längsstab 14 eng umschließenden Haken gebogen wird. Anschließend werden die Schieber 78, 80 wieder so weit zurückgezogen, bis sie mit der Innenfläche des Formhohlraums 76 bündig sind, und der Formhohlraum wird mit Kunststoffschmelze ausgespritzt, um die Umhüllung 70 zu bilden. Gleichzeitig kann auch das in Figuren 14 bis 16 nicht gezeigte Stützelement 22 gespritzt werden, in das die Querstäbe 18 eingebettet sind.

Wenn die Querstäbe 16, 18 an die Längsstäbe 14 angeschweißt werden, wie bei dem zuerst beschriebenen Ausführungsbeispiel, so können die Schweißelektroden analog zu dem in Figuren 14 bis 16 gezeigten Verfahren so ausgebildet werden, daß sie im zurückgezogenen Zustand mit der Innenfläche des Formhohlraums 76 bündig sind, so daß auch in diesem Fall die Schweißpunkte mit einer Umhüllung 70 umspritzt werden können. Zu Isolationszwecken muß die Schweißelektrode allerdings in dem Oberwerkzeug 44 in einer isolierenden Hülse geführt werden, deren Stirnfläche wiederum einen Teil der Wand des Formhohlraums 76 bildet.

## Patentansprüche

1. Verfahren zur Herstellung einer Lordosenstütze (12) mit einem in seiner Wölbung verstellbaren Stützelement (22) aus Kunststoff an Stäben (18) einer durch Längs- und Querstäbe (14, 16, 18) gebildeten Gittermatte (10), **dadurch gekennzeichnet, daß** die Stäbe (14, 16, 18) in ein Spritzgießwerkzeug (42, 44) für das Stützelement (22) eingebracht werden, daß dabei die Querstäbe (18) in Quernuten (18', 44) des Spritzgießwerkzeugs (42, 44) eingeführt werden, die beiderseits eines Formhohlraumes (22') für das Stützelement in einem Unterwerkzeug (42) und einem Oberwerkzeug (44) ausgebildet sind, und daß die Querstäbe (18) beim Schließen des Formwerkzeugs zwischen den Unter- und Oberwerkzeugen gehalten und beim Spritzen des Stützelements (22) in dieses eingebettet werden.

2. Verfahren nach Anspruch 1, **dadurch gekennzeichnet, daß** zumindest einige der Stäbe (14, 16, 18) mit dem Kunststoff des Stützelements (22) umspritzt werden.

3. Verfahren nach Anspruch 1 oder 2, **dadurch gekennzeichnet, daß** die Querstäbe (18), wenn sie in die Quernuten (18') des Spritzgießwerkzeugs (42, 44) eingeführt werden, mit ihrem Ende gegen einen im Spritzgießwerkzeug ausgebildeten Anschlag (48) geschoben werden.

4. Verfahren nach Anspruch 3, **dadurch gekennzeichnet, daß** die Querstäbe (18') als Endlosmaterial zugeführt und, wenn sie in Anlage an dem Anschlag (48) im Spritzgießwerkzeug (42, 44) fixiert sind, auf der dem Anschlag entgegengesetzten Seite des Spritzgießwerkzeugs abgeschnitten werden, wobei vorzugsweise eine Kante des Spritzgießwerkzeugs als Schneidkante genutzt wird.

5. Verfahren nach einem der vorstehenden Ansprüche, **dadurch gekennzeichnet, daß** sowohl die Querstäbe (16, 18) als auch die Längsstäbe (14) der Gittermatte (10) in das Spritzgießwerkzeug (42, 44) eingebracht und im Spritzgießwerkzeug miteinander verbunden werden.

6. Verfahren nach Anspruch 5, **dadurch gekennzeichnet, daß** die Längsstäbe (14) als gerade Stäbe, vorzugsweise als Endlosmaterial, in Längsnuten (14') des Spritzgießwerkzeugs (42, 44) eingeschoben werden.

7. Verfahren nach Anspruch 6, **dadurch gekennzeichnet, daß** die Längsstäbe (14) im Spritzgießwerkzeug (42, 44) gebogen werden, wobei ein Teil (42) des Spritzgießwerkzeugs als Biegeschablone (50) dient.

8. Verfahren nach Anspruch 6 oder 7, **dadurch gekennzeichnet, daß** Kunststoffteile (70, 72) an die Längsstäbe (14) der Gittermatte angespritzt werden.

9. Verfahren nach Anspruch 8, **dadurch gekennzeichnet, daß** zumindest einige dieser Kunststoffteile Umhüllungen (70) für die Verbindungsbereiche zwischen den Längsstäben (14) und den Querstäben (16, 18) sind.

10. Verfahren nach Anspruch 8 oder 9, **dadurch gekennzeichnet, daß** zumindest einige der Kunststoffteile Verankerungsstellen (72) für an den Längsstäben (14) einzuhängende Zugfedern sind.

11. Verfahren nach einem der Ansprüche 8 bis 10, **dadurch gekennzeichnet, daß** die Kunststoffteile (70, 72) in einem Arbeitsgang mit dem Stützelement (22) gespritzt werden.

12. Verfahren nach einem der Ansprüche 5 bis 11, **dadurch gekennzeichnet, daß** die Querstäbe (16, 18) mit den Längsstäben (14) verschweißt werden.

13. Verfahren nach einem der Ansprüche 5 bis 11, **dadurch gekennzeichnet, daß** die Querstäbe (16, 18) **dadurch** an den Längsstäben (14) befestigt werden, daß die Enden der Querstäbe (16, 18) um die Längsstäbe herum zu Ösen (68) oder Haken gebogen werden.

14. Verfahren zur Herstellung eines Auslöseelements für aktive Kopfstützen eines Fahrzeugsitzes, bei dem ein Funktionsteil aus Kunststoff an Stäben (18) einer durch Längs- und Querstäbe (14, 16, 18) gebildeten Gittermatte (10) befestigt wird, **dadurch gekennzeichnet, daß** die Stäbe (14, 16, 18) in ein Spritzgießwerkzeug (42, 44) für das Funktionsteil eingebracht werden, daß dabei die Querstäbe (18) in Quernuten (18', 44) des Spritzgießwerkzeugs (42, 44) eingeführt werden, die beiderseits eines Formhohlraumes (22') für das Funktionsteil in einem Unterwerkzeug (42) und einem Oberwerkzeug (44) ausgebildet sind, und daß die Querstäbe (18) beim Schließen des Formwerkzeugs zwischen den Unter- und Oberwerkzeugen gehalten und beim Spritzen des Funktionsteils in dieses eingebettet werden.

## Claims

1. Method for producing a lordotic support (12) having a support element (22) of plastics material of adjustable curvature on rods (18) of a lattice mat (10) formed by longitudinal and transverse rods (14, 16, 18), **characterised in that** the rods (14, 16, 18) are introduced into an injection-moulding tool (42, 44) for the support element (22), **in that** the transverse rods (18) are thereby inserted into transverse grooves (18', 44) of the injection-moulding tool (42, 44), which are formed on both sides of a mould cavity (22') for the support element in a lower tool (42) and an upper tool (44), and **in that**, when the moulding tool is closed, the transverse rods (18) are held between the lower and upper tools and, when the support element (22) is injection moulded, are embedded therein.

2. Method according to claim 1, **characterised in that** at least some of the rods (14, 16, 18) are overmoulded with the plastics material of the support element (22).

3. Method according to claim 1 or 2, **characterised in that**, when the transverse rods (18) are inserted into the transverse grooves (18') of the injection-moulding tool (42, 44), they are pushed with their end against a stop (48) formed in the injection-moulding tool.

4. Method according to claim 3, **characterised in that** the transverse rods (18') are supplied in the form of continuous material and, when they have been fixed in abutment with the stop (48) in the injection-moulding tool (42, 44), they are cut off on the opposite side of the injection-moulding tool to the stop, an edge of the injection-moulding tool preferably being used as the cutting edge.

5. Method according to any one of the preceding claims, **characterised in that** both the transverse rods (16, 18) and the longitudinal rods (14) of the lattice mat (10) are introduced into the injection-moulding tool (42, 44) and joined together in the injection-moulding tool.

6. Method according to claim 5, **characterised in that** the longitudinal rods (14) are pushed into longitudinal grooves (14') of the injection-moulding tool (42, 44) in the form of straight rods, preferably in the form of continuous material.

7. Method according to claim 6, **characterised in that** the longitudinal rods (14) are bent in the injection-moulding tool (42, 44), part (42) of the injection-moulding tool serving as a bending template (50).

8. Method according to claim 6 or 7, **characterised in that** plastics parts (70, 72) are injection-moulded onto the longitudinal rods (14) of the lattice mat.

9. Method according to claim 8, **characterised in that** at least some of those plastics parts are covers (70) for the joining regions between the longitudinal rods (14) and the transverse rods (16, 18).

10. Method according to claim 8 or 9, **characterised in that** at least some of the plastics parts are anchoring sites (72) for tension springs which are to be attached to the longitudinal rods (14).

11. Method according to any one of claims 8 to 10, **characterised in that** the plastics parts (70, 72) are injection moulded in one operation with the support element (22).

12. Method according to any one of claims 5 to 11, **characterised in that** the transverse rods (16, 18) are welded to the longitudinal rods (14).

13. Method according to any one of claims 5 to 11, **characterised in that** the transverse rods (16, 18) are fastened to the longitudinal rods (14) by the ends of the transverse rods (16, 18) being bent round the longitudinal rods to form eyelets (68) or hooks.

14. Method for producing an actuating element for active headrests of a motor vehicle seat, in which an operating member of plastics material is fastened to rods (18) of a lattice mat (10) formed by longitudinal and transverse rods (14, 16, 18), **characterised in that** the rods (14, 16, 18) are introduced into an injection-moulding tool (42, 44) for the operating member, **in that** the transverse rods (18) are thereby inserted into transverse grooves (18', 44) of the injection-moulding tool (42, 44), which are formed on both sides of a mould cavity (22') for the operating member in a lower tool (42) and an upper tool (44), and **in that**, when the moulding tool is closed, the transverse rods (18) are held between the lower and upper tools and, when the operating member is injection moulded, are embedded therein.

## Revendications

1. Procédé de fabrication d'un appui lombaire (12) comportant un élément de support (22) en matière plastique, dont la courbure peut être ajustée, sur des barreaux (18) d'une natte grillagée (10) formée de barreaux longitudinaux et de barreaux transversaux (14, 16, 18), **caractérisé en ce que** les barreaux (14, 16, 18) sont mis en place dans un outil de moulage par injection (42, 44) d'élément de support (22), les barreaux transversaux (18) sont en outre introduits dans des rainures transversales (18', 44) de l'outil de moulage par injection (42, 44) qui sont réalisées des deux côtés d'une cavité de moule (22') d'élément de support dans un outil inférieur (42) et un outil supérieur (44), et les barreaux transversaux (18) sont maintenus entre les outils inférieur et supérieur lors de la fermeture de l'outil de formage et sont noyés dans l'élément de support (22) lors du moulage par injection de celui-ci.

2. Procédé selon la revendication 1, **caractérisé en ce qu'**au moins quelques-uns des barreaux (14, 16, 18) sont surmoulés avec la matière plastique de l'élément de support (22).

3. Procédé selon la revendication 1 ou 2, **caractérisé en ce que** les barreaux transversaux (18), lorsqu'ils sont introduits dans les rainures transversales (18') de l'outil de moulage par injection (42, 44), sont poussés jusqu'à ce que leur extrémité soit contre une butée (48) réalisée dans l'outil de moulage par injection.

4. Procédé selon la revendication 3, **caractérisé en ce que** les barreaux transversaux (18') sont amenés en continu et, lorsqu'ils sont immobilisés dans l'installation au niveau de la butée (48) de l'outil de moulage par injection (42, 44), sont coupés du côté de l'outil de moulage par injection opposé à la butée, une arête de l'outil de moulage par injection étant utilisée de préférence comme arête de coupe.

5. Procédé selon l'une quelconque des revendications précédentes, **caractérisé en ce que** les barreaux transversaux (16, 18), mais aussi les barreaux longitudinaux (14) de la natte grillagée (10) sont mis en place dans l'outil de moulage par injection (42, 44) et sont reliés les uns avec les autres dans l'outil de moulage par injection.

6. Procédé selon la revendication 5, **caractérisé en ce que** les barreaux longitudinaux (14) sont insérés en tant que barreaux droits, de préférence en continu, dans des rainures longitudinales (14') de l'outil de moulage par injection (42, 44).

7. Procédé selon la revendication 6, **caractérisé en ce que** les barreaux longitudinaux (14) sont cintrés dans l'outil de moulage par injection (42, 44), une partie (42) de l'outil de moulage par injection servant de gabarit de cintrage (50).

8. Procédé selon la revendication 6 ou 7, **caractérisé en ce que** des parties en matière plastique (70, 72) sont injectées au niveau des barreaux longitudinaux (14) de la natte grillagée.

9. Procédé selon la revendication 8, **caractérisé en ce qu'**au moins quelques-unes de ces parties en matière plastique sont des gaines (70) pour les secteurs de liaison entre les barreaux longitudinaux (14) et les barreaux transversaux (16, 18).

10. Procédé selon la revendication 8 ou 9, **caractérisé en ce qu'**au moins quelques-unes des parties en matière plastique sont des points d'ancrage (72) pour des ressorts de traction à accrocher au niveau des barreaux longitudinaux (14).

11. Procédé selon l'une quelconque des revendications 8 à 10, **caractérisé en ce que** les parties en matière plastique (70, 72) sont injectées avec l'élément de support (22) en une opération.

12. Procédé selon l'une quelconque des revendications 5 à 11, **caractérisé en ce que** les barreaux transversaux (16, 18) sont soudés avec les barreaux longitudinaux (14).

13. Procédé selon l'une quelconque des revendications 5 à 11, **caractérisé en ce que** les barreaux transversaux (16, 18) sont fixés sur les barreaux longitudinaux (14) en cintrant les extrémités des barreaux transversaux (16, 18) autour des barreaux longitudinaux pour former des boucles (68) ou des crochets.

14. Procédé de fabrication d'un élément de déclenchement pour des appuis-tête actifs d'un siège de véhicule, dans lequel un organe de service en matière plastique est fixé sur les barreaux (18) d'une natte grillagée (10) formée de barreaux longitudinaux et de barreaux transversaux (14, 16, 18), **caractérisé en ce que** les barreaux (14, 16, 18) sont mis en place dans un outil de moulage par injection (42, 44) d'organe de service, les barreaux transversaux (18) sont en outre introduits dans des rainures transversales (18', 44) de l'outil de moulage par injection (42, 44) qui sont réalisées des deux côtés d'une cavité de moule (22') d'organe de service dans un outil inférieur (42) et un outil supérieur (44), et les barreaux transversaux (18) sont maintenus entre les outils inférieur et supérieur lors de la fermeture de l'outil de formage et sont noyés dans l'organe de service lors de l'injection de celui-ci.
